# EUROPÄISCHE PATENTSCHRIFT

(11) **EP 0 462 685 B1**
(45) Veröffentlichungstag und Bekanntmachung des Hinweises auf die Patenterteilung: **17.08.1994**
(21) Anmeldenummer: 91250142.6
(22) Anmeldetag: 30.05.1991
(51) Int. Cl.: B63H 23/30, F16D 25/14

(54) **Schiffsantrieb mit Trolling-Einrichtung**
Ship propulsion with trolling device
Entraînement pour bateau avec dispositif pour la navigation en ralenti

(30) Priorität: 18.06.1990 DE 4019687
(43) Veröffentlichungstag der Anmeldung: 27.12.1991
(73) Patentinhaber: MANNESMANN Aktiengesellschaft, 40027 Düsseldorf (DE)
(72) Erfinder: Ridder, Gerhard, W-5810 Witten (DE); Burdack, Jürgen, Dipl.-Ing., W-5860 Letmathe (DE)
(74) Vertreter: Meissner, Peter E., Dipl.-Ing.

(56) Entgegenhaltungen:
- DE-A- 2 728 515
- US-A- 3 653 476
- PATENT ABSTRACTS OF JAPAN vol. 10, no. 130 (M-478)(2187) 14. Mai 1986 & JP-A-60 256 629 (KAWASAKI )

## Beschreibung

Die Erfindung betrifft einen Schiffsantrieb mit einem zwischen Motor und Propeller angeordneten Getriebe, das hydraulisch steuerbar und wahlweise betätigbare Vorwärts- und Rückwärtskupplungen, sowie eine mit einem Druckreduzierventil versehene Trolling-Einrichtung aufweist.

Bei Schiffsantrieben mit Trolling-Einrichtungen besteht die Möglichkeit, bei konstanter Motororehzahl Einfluß auf die Propellerdrehzahl zu nehmen. Trolling wird insbesondere angewandt bei Hafenmanövern und Kanalfahrten, da hier in der Regel bei konstanter Getriebeübersetzung die Schiffsgeschwindigkeit bei kleinstmöglicher Motordrehzahl noch zu groß ist. Andere Anwendungsgebiete des Trolling sind die Kriechfahrt beim Fischen mit Schleppnetz.

Durch eine Trolling-Einrichtung kann die Propellerdrehzahl auf 0,9 bis 0,4 x Antriebsdrehzahl des Nichttrollingbetriebes vermindert werden. Die Verminderung der Propellerdrehzahl wird bei vorgegebener Motordrehzahl durch definiertes Rutschen der Lamellen der als Lamellenkupplung ausgebildeten Vorwärts- und Rückwärtskupplungen erreicht.

Bei der zum Einsatz kommenden Lamellenkupplung werden die Lamellen durch Federdruck entlastet und durch Kupplungsöldruck gegeneinander gepreßt. Beim Trollingbetrieb wird der Kupplungsöldruck so weit abgesenkt, daß ein gezielter Rutschvorgang aufrechterhalten wird. Während des Trollingbetriebes wird durch die Kupplungslamellen eine stark erhöhte Ölmenge zur Schmierung und zum Abführen der Reibungswärme geleitet.

Aus der DE-PS 24 42 301 ist ein Getriebe für Wasserfahrzeuge mit hydraulisch steuerbaren Kupplungen und einer Drucksteuerventil-Einrichtung zum Regulieren des Druckanstiegs in dem der angesteuerten Kupplung zugeführten Druckmittel bekannt, bei der Steuereinrichtungen vorgesehen sind, die von Hand betätigbare Elemente zur Feineinstellung des Kriechsbereichs des Wasserfahrzeugs aufweisen.

Bei der aus dieser Schrift bekannten Trolling-Einrichtung sind Betriebszustände möglich, bei denen die kupplungen zerstört werden können. Dies ist insbesondere dann der Fall, wenn die Steuereinrichtung zum Steuern des Drucköles auf langsame Propellerdrehzahl gestellt wird und gleichzeitig der Motor im Bereich der Nenndrehzahl betrieben wird. Bei solchen Betriebszuständen ist das Schmieröl nur eine begrenzte Zeit in der Lage, bei Lamellenkupplungen die durch die Reibung der Lamellen anfallende Wärmemenge abzuführen. Als Folge der zu geringen Wärmeabfuhr vercrackt das Öl, die Reibkräfte erhöhen sich in einzelnen Fällen, so daß die Lamellen miteinander verschweißt werden.

Aus der US 36 53 476 ist eine Einrichtung zur automatischen Änderung des an einer Kupplung anliegenden Druckes bekannt, um damit in Abhängigkeit von notwendigen Manöverbedingungen ggf. einen geregelten Schlupf der Kupplung zuzulassen. Hiermit kann bspw. die Propellergeschwindigkeit bei gleichbleibender Rotordrehzahl verringert werden oder es kann auch ein schlupffreier Antrieb gewährleistet werden. Die Steuerung erfolgt dabei über eine pneumatische oder hydraulische Steuereinheit und entsprechende Druck- bzw. Steuerventile zwischen den Kupplungen und der Steuereinheit. Über die zur Anwendung kommende Kupplung werden keine Angaben gemacht.

Die Erfindung hat sich die Aufgabe gestellt, einen eine Trolling-Einrichtung aufweisenden Schiffsantrieb zu schaffen, der mit einfachen Mitteln bei geringem Aufwand eine Zerstörung der Kupplungen durch Fehlbedienung ausschließt und in jedem Betriebszustand der Trolling-Einrichtung ein sicheres Manövrieren eines Schiffes zuläßt.

Die Erfindung löst diese Aufgabe durch die Merkmale des Anspruchs 1.

Bei dem erfindungsgemäßen Schiffsantrieb wird zwischen einem Druckreduzierventil der Trolling-Einrichtung und einer für den Trollingbetrieb vorgesehenen Kupplung ein Ventil angeordnet, das hydraulisch mit dem Druckreduzierventil in Verbindung steht und gleichzeitig an die Druckleitung anschließbar ist. Bei ausreichendem Steuerdruck wird das Ventil in die Arbeitsstellung "Trolling" geschaltet. In Abhängigkeit der Einstellung des Druckreduzierventils mittels der Steuereinheit wird der gewünschte Druck in der Druckölleitung hervorgerufen. Bei nicht vollem Öldruck schlupft die Kupplung. Die Propellerweile dreht sich langsamer als das über das Getriebe von der Motordrehzahl vorgegebene Untersetzungsverhältnis es ergäbe. Die Drehzahl läßt sich stufenlos um 10 - 60 % der Nichttrollingfahrweise absenken. In Strömungsrichtung hinter dem Zweiwegeventil ist eine Zuleitung zu der Kupplung vorgesehen, wobei diese Zuleitung über ein Rückschlagventil mit einer mit dem Tank in Verbindung stehenden Leitung zur Schnellentlüftung verbunden ist.

An dem Druckreduzierventil ist ein elektrischer Sollwertgeber für die Schlupfvorgabe vorgesehen. Mit diesem Sollwertgeber kann der Schiffsführer die von ihm gewünschte Kriechfahrt einstellen.

Darüber hinaus ist die elektronische Steuereinheit an einem Drehzahlaufnehmer angeschlossen, mit dem sich die aktuelle Drehzahl der Motorwelle erfassen läßt. Beim Überschreiten eines vorgegebenen Wertes wird das Druckreduzierventil über die elektronische Steuereinheit auf Ruhestellung geschaltet, der Druck in Strömungsrichtung hinter dem Druckreduzierventil sinkt. Beim Unterschreiten eines bestimmten Druckniveaus schaltet das federbelastete Wegeventil, das zwischen dem Druckreduzierventil und der Kupplung angeordnet ist auf Ruhestellung mit der Folge, daß die Kupplung mit vollem Öldruck beaufschlagt wird und in Arbeitsstellung schaltet. Der Propeller wird schlupffrei angetrieben und das Schiff bleibt voll manövrierfähig. Dabei wird das Schiff beschleunigt. Der Schiffsführer, der beispielsweise im Hafen manövriert, hat - falls ihm die Schiffsfahrt nun zu schnell ist - die Möglichkeit, den Trollingbetrieb dadurch wieder aufzunehmen, daß er die angepaßte, also langsamere Motordrehzahl wieder einstellt. Dazu ist die Steuerung durch den Schiffsführer zu aktivieren, beispielsweise durch einen Taster. Sollte ihm aber die neue Geschwindigkeit nicht zu hoch sein, so kann er - auch wenn er vergessen hat, die Trolling-Einrichtung abzustellen - mit dem Schiff weiterfahren, ohne daß es zu hohen Belastungen bis zur Zerstörung der Kupplung kommt. Bei eingeschalteter Steuereinheit der Trolling-Einrichtung wird diese erst wieder tätig, wenn die Steuerung aktiviert und die Motordrehzahl reduziert wird, und zwar vorzugsweise unter 1000 U/min.

Bei Stromausfall des Bordnetzes wird das Druckreduzierventil abgeschaltet, der Druck im Leitungssystem zwischen Druckreduzierventil und Kupplung wird so weit reduziert, so daß das federbelastete Ventil auf Ruhestellung schaltet, mit der Folge, daß die Kupplung mit vollem Öldruck belastet wird. Über das Getriebe wird der Propeller schlupflos angetrieben.

Das extern betätigte Wegeventil zum Einschalten der Vorwärts- bzw. Rückwärtskupplung kann im Ölstromkreis vor oder hinter der Trolling-Einrichtung angeordnet sein. Da im wesentlichen der Trollingbetrieb bei Vorwärtsfahrt angewandt wird, bietet sich die Anordnung der Trolling-Einrichtung in der Nähe der Kupplung an.

Neben der Drehzahlmessung besteht noch die Möglichkeit, weitere Meßwerte, wie Öltemperatur oder Öldruck mit aufzunehmen, um je nach Vorgabe Einfluß auf die Trolling-Einrichtung zu nehmen.

Bei der Drehzahlmessung wird sowohl das Über- wie auch das Unterschreiten einer vorgegebenen Drehzahl überwacht und die elektronische Steuereinheit stromlos geschaltet. Bei der Überwachung des Unterschreitens einer bestimmten Drehzahl wird verhindert, daß bei Ausfall des Drehzahlgebers, beispielsweise durch Abreißen eines Kabels, die elektronische Steuereinheit auf Hydraulikbetrieb geschaltet werden kann. In einem solchen Betriebszustand hätte ein unzulässiges Einschalten der Trolling-Einrichtung bei gleichzeitig fehlender Möglichkit des Erkennens eines Maximalwertes negativen Einfluß auf die Standzeit der Kupplung.

Ein Beispiel der Erfindung ist in der Zeichnung dargestellt. Es zeigt:

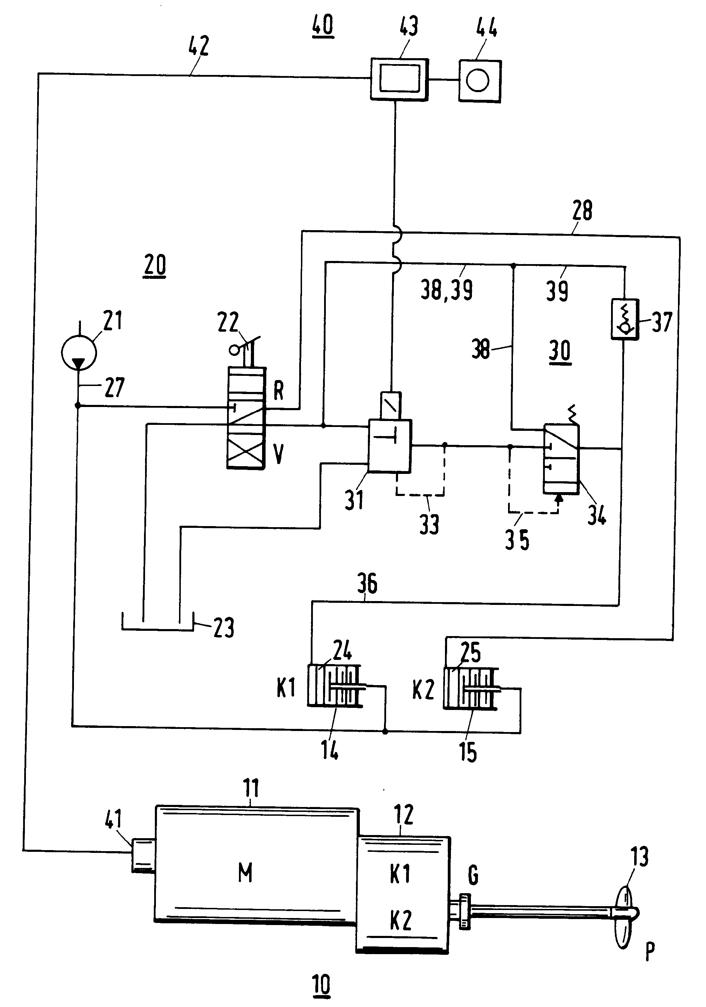

- Fig. 1: ein Schema eines Schiffsantriebs.

Der Schiffsantrieb 10 weist dabei einen Motor 11, ein Getriebe 12 und einen Propeller 13 auf. Das Getriebe 12 steht dabei in Wirkverbindung mit den Kupplungen 14, 15 (K1, K2).

An dem Motor 11 ist ein Drehzahlaufnehmer 41 der Drehzahlsteuerung 40 vorgesehen, der über eine Verbindungsleitung 42 mit einer elektronischen Steuereinheit 43 in Verbindung steht. An der elektronischen Steuereinheit 43 ist ein Sollwertgeber 44 angeordnet.

Die elektronische Steuereinheit 43 ist elektrisch mit einem Druckreduzierventil 31 der Trolling-Einrichtung 30 verbunden, die mit der Hydraulikeinrichtung 20 hydraulisch in Verbindung steht. Die Hydraulikeinrichtung 20 weist eine Pumpe 21 sowie in einer Druckölleitung 27 angeordnetes Wegeventil 22 auf. In Strömungsrichtung hinter dem Ventil 22 ist das Druckreduzierventil 31 angeordnet. Das Druckreduzierventil 31 kann als Proportionalventil ausgebildet sein, wobei der hydraulische Druck über die Leitung 33 wirkt.

Das Druckreduzierventil 31 steht in Strömungsrichtung in Verbindung mit einem Wegeventil 34, an das eine Steuerölleitung 35 angeschlossen ist. Zwischen dem Wegeventil 34 und der Vorwärtskupplung 14 ist eine Zuleitung 36 vorgesehen. An das Wegeventil 34 ist weiterhin eine Leitung 38 zur Umgehung des Druckreduzierventils 31 angeordnet. Mit der Umgehungsleitung 38 steht eine Schnellentlüftungsleitung 39 in Verbindung, in der ein Rückschlagventil 37 vorgesehen ist, das wiederum mit dem Wegeventil 34 und der Kupplung 14 hydraulisch in Verbindung steht.

## Patentansprüche

1. Schiffsantrieb mit einem zwischen Motor (11) und Propeller (13) angeordnetem Getriebe (12), das hydraulisch steuerbare und wahlweise betätigbare Vorwärts- und Hückwärtskupplungen sowie eine mit einem Druckreduzierventil versehene Trolling-Einrichtung aufweist, wobei das Druckreduzierventil (31) der Trolling-Einrichtung (30) eine elektronische-hydraulische Steuereinheit (43) besitzt, einen stufenlos verstellbaren Sollwertgeber (44) aufweist und steuerungstechnisch mit einem Drehzahlaufnehmer (41) in Verbindung steht, wobei zwischen dem Druckreduzierventil (31) und mindestens einer der Kupplungen (14, 15) ein hydraulisch mit dem Druckreduzierventil (31) in Verbindung stehendes, an die Druckölleitung angeschlossenes hydraulisch steuerbares federbelastetes Wegeventil (34) angeordnet ist, wobei ferner zwischen einer Zuleitung (36) zur Kupplung (14) und einer Schnellentlüftungsleitung (39) ein Rückschlagventil (37) vorgesehen ist und das Wegeventil (34) über eine Umgehungsleitung (38) bei Umgehung des Druckreduzierventiles (31) mit der Druckölleitung (27) verbindbar ist.

2. Schiffsantrieb nach Anspruch 1,
dadurch gekennzeichnet,
daß in der elektronischen Steuereinheit (43) Elemente vorgesehen sind, die beim Unter- und Überschreiten einer vorgegebenen Drehzahl des Motors (11) stromlos geschaltet werden.

3. Schiffsantrieb nach Anspruch 1,
dadurch gekennzeichnet,
daß das Druckreduzierventil (31) ein Proportional-Druckreduzierventil ist.

## Claims

1. A ship's propulsion engine with a transmission (12) located between the engine (11) and propeller (13), which transmission has hydraulically controllable and selectively operable forward and reverse clutches and a trolling means provided with a pressure-reducing valve, the pressure-reducing valve (31) of the trolling means (30) having an electronic/hydraulic control unit (43), an infinitely adjustable set-point device (44) and is connected for control to an engine speed recorder (41), with a hydraulically controllable spring-loaded distributing valve (34) which is in hydraulic connection with the pressure-reducing valve (31) and which is connected to the pressure oil line being located between the pressure-reducing valve (31) and at least one of the clutches (14, 15), and furthermore a non-return valve (37) being provided between a feed line (36) to the clutch (14) and a quick-vent line (39), and the distributing valve (34) being able to be connected to the pressure oil line (27) via a bypass line (38), bypassing the pressure-reducing valve (31).

2. A ship's propulsion engine according to Claim 1, characterised in that elements are provided in the electronic control unit (43) which are disconnected from the power supply if the speed of the engine (11) drops below or exceeds a given speed.

3. A ship's propulsion engine according to Claim 1, characterised in that the pressure-reducing valve (31) is a proportional pressure-reducing valve.

## Revendications

1. Entraînement de bateau comportant un jeu d'engrenages (12) agencé entre le moteur (11) et l'hélice (13) et muni de coupleurs avant et arrière pouvant être commandés de façon hydraulique et pouvant être actionnés au choix, ainsi que d'un dispositif pour la navigation au ralenti pourvu d'une soupape de réduction, la soupape de réduction (31) du dispositif pour la navigation au ralenti (30) comportant une unité de commande électronique-hydraulique (43), présentant un émetteur de valeur prescrite (44) réglable en continu et reliée de façon commandée à un capteur de vitesse de rotation (41), une soupape de course (34) reliée de façon hydraulique à la soupape de réduction (31), raccordée à la liaison d'huile sous pression, pouvant être commandée de façon hydraulique et contraint élastiquement, étant agencée entre la soupape de réduction (31) et au moins un des coupleurs (14, 15), une soupape de retour (37) étant en outre prévue entre une liaison (36) vers le coupleur (14) et une liaison d'aération rapide (39), et la soupape de course (34) pouvant être reliée à la liaison d'huile sous pression (27) par l'intermédiaire d'une liaison de contournement (38) contournant la soupape de réduction (31).

2. Entraînement de bateau selon la revendication 1, caractérisé en ce que dans l'unité de commande électronique (43) sont prévus des éléments qui sont commutés sans courant lorsque la vitesse de rotation du moteur (11) passe au-dessous ou au-dessus d'une valeur prédéfinie.

3. Entraînement de bateau selon la revendication 1, caractérisé en ce que la soupape de réduction (31) est une soupape de réduction proportionnelle.
